# EUROPÄISCHE PATENTSCHRIFT

(11) **EP 2 593 256 B1**
(45) Veröffentlichungstag und Bekanntmachung des Hinweises auf die Patenterteilung: **19.04.2017**
(21) Anmeldenummer: 11730226.5
(22) Anmeldetag: 07.07.2011
(51) Int. Cl.: B23B 31/20, B25B 13/02

(54) **ABRUTSCHSICHERES SPANNSYSTEM**
SLIP-PROOF CLAMPING SYSTEM
SYSTÈME DE SERRAGE ANTI-GLISSEMENT

(30) Priorität: 16.07.2010 CH 11662010
(43) Veröffentlichungstag der Anmeldung: 22.05.2013
(73) Patentinhaber: Rego-Fix AG, 4456 Tenniken (CH)
(72) Erfinder: GERBER, Ernst, CH-4418 Reigoldswil (CH)
(74) Vertreter: Braun, André jr.
(86) Internationale Anmeldenummer: PCT/EP2011/003378
(87) Internationale Veröffentlichungsnummer: WO 2012/007127

(56) Entgegenhaltungen:
- CH-A- 278 343
- DE-A1- 10 302 529
- DE-A1-102009 006 520
- US-A1- 2008 173 142

## Beschreibung

Die vorliegende Erfindung betrifft ein abrutschsicheres System aus einem Schraubverbindungselement mit Ausnehmungen für den Eingriff eines mit in die Ausnehmungen passenden Nocken versehenen Schlüssels zum Anziehen und Lösen des Schraubverbindungselements.

Bei Schraubverbindungselementen, also Schrauben, Muttern und dergl., bei denen der Eingriff eines Werkzeugs zum Anziehen und Lösen des Schraubverbindungselements an dessen Stirnseite erfolgt, besteht eine erhöhte Gefahr des ungewollten Abrutschens des Werkzeugs. Die Folge ist zum einen die mögliche Beschädigung des Schraubverbindungselements und des Werkzeugs und zum anderen die Möglichkeit von Verletzungen. Vor allem beim Ein- und Ausspannen von äusserst scharfen Schneidwerkzeugen in Werkzeugmaschinen ist die Verletzungsgefahr eklatant. Es wurden deshalb abrutschsichere Spannsysteme entwickelt, um dieser Gefahr zu begegnen.

So ist beispielsweise aus DE 299 07 998 U ein System bekannt, bei dem die Spannmutter mit stirnseitigen, radial ausgerichteten Nuten mit schwalbenschwanzförmigem Querschnitt versehen ist, in die ein Schlüssel mit Stiften bzw. Nocken mit ebenfalls schwalbenschwanzförmigem Querschnitt zum Spannen und Lösen der Spannmuttern eingreift. Die Schwalbenschwanzverbindung zwischen Schlüssel und Spannmutter soll ein unbeabsichtigtes Abrutschen des Schlüssels beim Spannvorgang verhindern.

Aus DE 103 02 529 ist ein abrutschsicheres Spannsystem bekannt, bei dem zur Vermeidung von Nachteilen des schwalbenschwanzförmigen Querschnitts von Nuten und Nocken deren Seitenflanken ein S-förmiges Profil aufweisen.

Aus EP 1 563 959 ist ein Spannsystem aus Spannmutter und Spannschlüssel bekannt, bei dem die stirnseitigen Nocken der Spannmutter oder des Schlüssels mit zusätzlichen Hinterschneidungen versehen sind, um die Abrutschsicherheit zu erhöhen.

Der Erfindung liegt die Aufgabe zugrunde, das Prinzip des abrutschsicheren Zusammenwirkens von Schraubverbindungselement und Schlüssel mit stirnseitigem Eingriff für andere Anwendungen nutzbar zu machen.

Erfindungsgemäss wird dies durch die Merkmale des unabhängigen Anspruchs 1 gelöst.

Bevorzugte Ausführungsbeispiele zeichnen sich durch die in den Unteransprüchen angegebenen Merkmale aus.

Im folgenden sind anhand der beiliegenden Zeichnungen bevorzugte Ausführungsbeispiele der Erfindung beschrieben. Es zeigen:
- Fig. 1: eine Spannmutter mit sechs Ausnehmungen und zwar a) eine axiale Draufsicht auf die Stirnfläche, b) eine Seitenansicht, c) einen Schnitt entlang der Linie A-A und d) eine vergrösserte Teilansicht einer Ausnehmung,
- Fig. 2: einen Schlüssel mit Nocken für den Eingriff in die Ausnehmungen der in Fig. 1 gezeigten Spannmutter und zwar a) eine Seitenansicht senkrecht zum Griff, b) eine Seitenansicht von der Seite des Griffs, c) eine Draufsicht und d) einen Schnitt entlang der Linie B-B und e) eine vergrösserte Teilansicht eines Nockens,
- Fig. 3: eine Spannmutter mit einer anderen Form von Ausnehmungen und zwar a) eine axiale Draufsicht auf die Stirnfläche, b) eine Seitenansicht, c) einen Schnitt entlang der Linie B-B und d) eine vergrösserte Teilansicht einer Ausnehmung,
- Fig. 4: einen Schlüssel mit vier Nocken für den Eingriff in die Ausnehmungen der in Fig. 3 gezeigten Spannmutter und zwar a) eine Seitenansicht senkrecht zum Griff, b) einen Schnitt entlang der Linie A-A,
- Fig. 5: eine alternative Form eines Schlüssels mit zwei Nocken für den Eingriff in die Ausnehmungen der in Fig. 3 gezeigten Spannmutter und zwar a) eine Seitenansicht senkrecht zum Griff, b) einen Schnitt entlang der Linie A-A

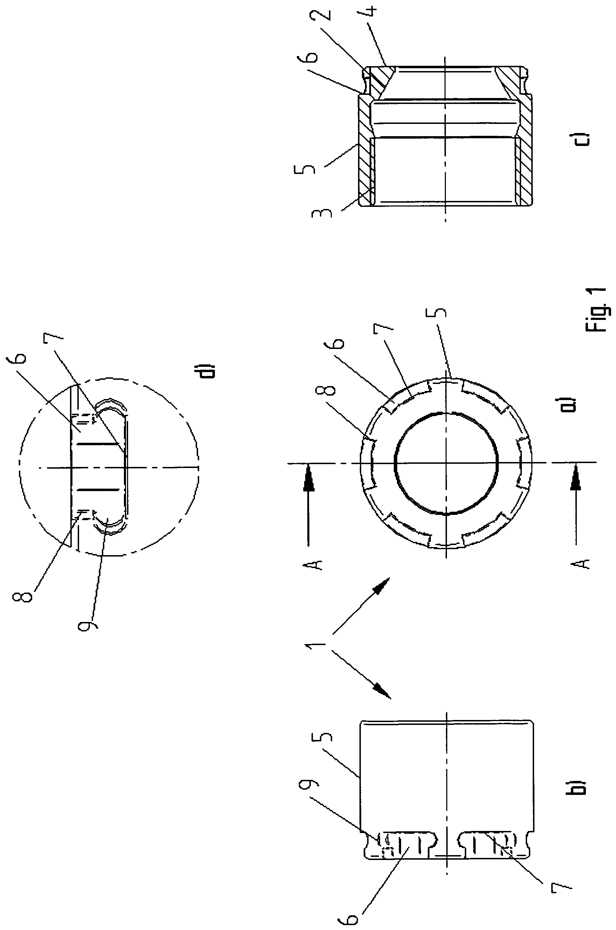

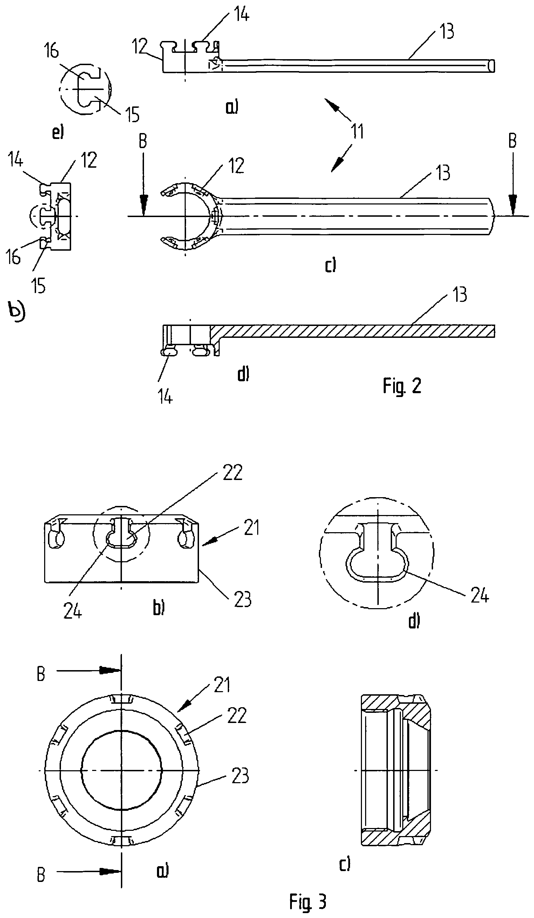

Die in Fig. 1a-d gezeigte Spannmutter 1 in Form einer Überwurfmutter besitzt, wie von herkömmlichen Spannmuttern bekannt, einen Innenkonus 2 für das zentrierte Erfassen einer Spannzange, ein Gewinde 3 zum Aufschrauben auf das Aussengewinde einer Werkzeugmaschinenspindel oder Werkzeugaufnahme, eine senkrecht zur Achse stehende ringförmige Stirnfläche 4 und eine im wesentlichen zylindrische Mantelfläche 5. Die Mantelfläche ist mit sechs gleichmässig, d.h. in Winkelabständen von 60°, über den Umfang verteilten Ausnehmungen 6 versehen, die sich von der Stirnfläche aus achsparallel in die Mantelfläche erstrecken. Die Tiefe der Ausnehmungen in radialer Richtung beträgt etwa die Hälfte der Wandstärke der Spannmutter. Der Boden 7 der Ausnehmungen ist entsprechend dem Achsabstand gekrümmt. Die Öffnungen oder Mündungen der Ausnehmungen zur Stirnfläche besitzen jeweils eine Breite in tangentialer Richtung, die etwa 30° bis 40° des Umfangs der Spannmutter entspricht. Diese Breite behalten die Ausnehmungen über einen Aussenbereich bei, der sich über etwa die Hälfte ihrer axialen Länge erstreckt. Die ebenen Seitenwände 8 in diesem Aussenbereich sind durch Axialebenen definiert und stehen somit senkrecht auf dem Boden 7. In einem an den Aussenbereich anschliessenden Innenbereich sind die Ausnehmungen durch einander gegenüberliegende halbkreisförmige Ausbuchtungen 9 der Seitenwände in tangentialer Richtung erweitert auf eine maximale Breite, die etwa 40° bis 45° des Umfangs entspricht. Zum Anziehen und Lösen der vorstehend beschriebenen Spannmutter dient der in Fig. 2 gezeigte Schlüssel 11 mit einem Kopf 12 und einem Griff 13. Der Kopf hat die Form eines Ringsegments von ca. 250°. Symmetrisch auf dem Ringsegment sind in gleichmässigen Winkelabständen von 60° axial vorspringende Nocken 14 angeordnet, die bei eingesetztem Schlüssel in die Ausnehmungen der Spannmutter eingreifen. Die Nocken besitzen, wie in den Seitenansichten und der Detailansicht erkennbar, eine Art Pilzform mit einem engeren Halsteil 15 und daran anschliessenden beidseitigen halbkreisförmigen Verbreiterungen 16. Die Form der Verbreiterungen entspricht passgenau den Ausbuchtungen 8 der Ausnehmungen der Spannmutter 1.

Die tangentiale Breite der Verbreiterungen 16 ist geringfügig kleiner als die tangentiale Breite des Aussenbereichs der Ausnehmungen der Spannmutter. Auf diese Weise kann der Schlüssel in axialer Richtung an der Spannmutter angesetzt werden, wobei die Nocken 14 in die Ausnehmungen 5 eingeführt werden. Durch Drehen des Schlüssels zum Anziehen oder Lösen der Spannmutter, d.h. wenn ein Drehmoment wirksam ist, greifen die Verbreiterungen der Nocken in die Ausbuchtungen der Ausnehmungen, so dass ein axiales Abgleiten des Schlüssels nicht möglich ist.

Neben dem sicheren Verhindern des Abrutschens des Schlüssels ist dieses System noch vorteilhaft wegen des geringen Platzbedarfs am Umfang der Spannmutter und wegen seiner einfachen Herstellung. Ein weiterer Vorteil besteht darin, dass die Kraftübertragungsschulter rechtwinklig zur Krafteinwirkung ist, d.h. die Krafteinwirkung erfolgt optimal tangential. Schliesslich besteht ein weiterer Vorteil darin, dass vielfältige Schlüsselformen mit demselben sicheren Eingriff in die Mutter möglich sind, z.B. als Steckschlüssel, Steckhülse, zum Ansetzen eines Sechskant- oder Drehmomentschlüssels ausgebildete Stecknuss, oder als Verlängerung mit einer weiteren Schnittstelle.

Die in Fig. 3 gezeigte Spannmutter 21 ist wie die vorstehend beschriebene Spannmutter 1 mit sechs über den Umfang verteilten Ausnehmungen 22 in ihrer Mantelfläche 23 versehen. Die Form dieser Ausnehmungen ist ähnlich wie die der Spannmutter 1, d.h. sie besitzt einen engeren Aussenbereich und einen daran anschliessenden erweiterten Innenbereich mit einander gegenüberliegenden Ausbuchtungen 24. Die Breite der Ausnehmungen in tangentialer Richtung ist aber kleiner und entspricht nur etwa 15° im engeren Aussenbereich und etwa 25° im erweiterten Innenbereich.

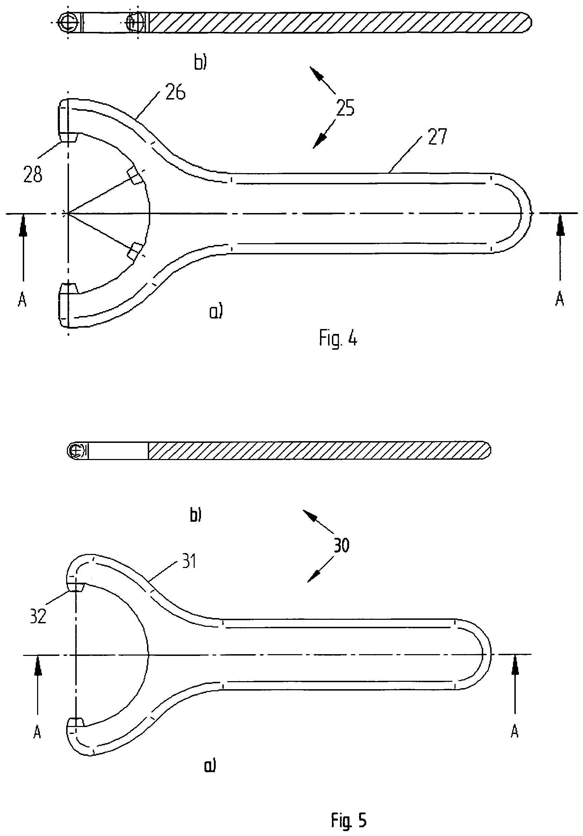

Für diese Spannmutter geeignete Schlüssel sind in den Fig. 4 und 5 gezeigt. Der in Fig. 4 gezeigte Schlüssel 25 besitzt einen Kopf 26 und einen Griff 27. Der Kopf hat die Form eines Ringsegments von ca. 180°. Symmetrisch auf der Innenseite des Ringsegments sind in gleichmässigen Winkelabständen von 60° vier radial vorspringende Nocken 28 angeordnet, die bei eingesetztem Schlüssel in die Ausnehmungen der Spannmutter eingreifen. Die Nocken besitzen, wie in der Schnittdarstellung der Fig. 4b erkennbar, die Form eines Kegelstumpfs, der passgenau den Ausbuchtungen 24 der Ausnehmungen der Spannmutter 21 entspricht.

Die Breite der Nocken ist geringfügig kleiner als die Breite des Aussenbereichs der Ausnehmungen der Spannmutter. Auf diese Weise kann der Schlüssel in axialer Richtung an der Spannmutter angesetzt werden, wobei die Nocken 28 in die Ausnehmungen 22 eingeführt werden. Durch Drehen des Schlüssels zum Anziehen oder Lösen der Spannmutter, d.h. wenn ein Drehmoment wirksam ist, greifen die Nocken in die Ausbuchtungen 24 der Ausnehmungen ein, so dass ein axiales Abgleiten des Schlüssels nicht möglich ist.

Der in Fig. 5 gezeigte Schlüssel 30 ist dem Schlüssel gemäss Fig. 4 ähnlich, besitzt aber nur zwei Nocken 32, die an den einander gegenüberliegenden Enden des ringsegmentförmigen Kopfes 31 angeordnet sind. Beim Ansetzen dieses Schlüssels an der Spannmutter 21 werden die Nocken in einander gegenüberliegende Ausnehmungen 22 in axialer Richtung eingeführt. Beim Drehen dieses Schlüssels greifen die Nocken ebenfalls in die Ausbuchtungen der Ausnehmungen ein, so dass ein Abrutschen nicht möglich ist.

## Patentansprüche

1. Abrutschsicheres Spannsystem aus einem Schlüssel und einem Schraubverbindungselement mit Ausnehmungen für den Eingriff des mit in die Ausnehmungen passenden Nocken versehenen Schlüssels zum Anziehen und Lösen des Schraubverbindungselements, wobei das Schraubverbindungselement eine Überwurfmutter mit einer zylindrischen Mantelfläche und einer ringförmigen Stirnfläche ist und die Ausnehmungen in der Mantelfläche angeordnet sind, **dadurch gekennzeichnet, dass** die Ausnehmungen (6,22) sich von der Stirnfläche aus achsparallel über einen Teil der Mantelfläche (5,23) erstrecken, eine Tiefe in radialer Richtung von etwa der halben Wandstärke der Mutter (1, 21) und in einem an die Stirnfläche anschliessenden Aussenbereich über etwa die Hälfte der axialen Erstreckung der Ausnehmung eine gleichbleibende Breite mit ebenen Seitenwänden und in einem axial anschliessenden Innenbereich eine durch einander gegenüberliegende Ausbuchtungen der Seitenwände gebildete Verbreiterung besitzen, und der Schlüssel (11,25,30) einen Kopf (12,26,31) besitzt, der mit in axialer Richtung in die Ausnehmungen einschiebbaren Nocken (14,28,32) versehen ist.

2. Abrutschsicheres Spannsystem nach Anspruch 1, **dadurch gekennzeichnet, dass** die Ausbuchtungen halbkreisförmig sind.

3. Abrutschsicheres Spannsystem nach Anspruch 1, **dadurch gekennzeichnet, dass** die Nocken des Schlüssels mit im Abstand vom Kopf angeordneten, in die Ausbuchtungen der Ausnehmungen passenden Verbreiterungen (16) versehen sind.

4. Abrutschsicheres Spannsystem nach Anspruch 1, **dadurch gekennzeichnet, dass** der Schlüsselkopf mit radial nach innen gerichteten kegelstumpfförmigen Nocken (28,32) versehen ist.

5. Abrutschsicheres Spannsystem nach einem der vorangehenden Ansprüche, **dadurch gekennzeichnet, dass** die grösste tangentiale Breite der Nocken kleiner ist als die kleinste tangentiale Breite der Ausnehmungen.

## Claims

1. A slip-proof clamping system consisting of a wrench and a screw connecting element having recesses for the engagement of the wrench, said wrench being provided with lobes which fit in the recesses for tightening and loosening the screw connecting element, wherein the screw connecting element is a sleeve nut with a cylindrical curved surface and an annular face surface, and the recesses are arranged in the curved surface, **characterized in that** the recesses (6, 22) extend from the face surface parallel to the axis over part of the curved surface (5, 23), have a depth in the radial direction of approximately half the wall thickness of the nut (1, 21), and, in an outer region connecting to the face surface, have a constant width with flat side walls over approximately half the axial extension of the recess and, in an axially connecting inner region, an enlargement formed by mutually opposing indentations of the side walls, and the wrench (11, 25, 30) has a head (12, 26, 31) which is provided in the axial direction with lobes (14, 28, 32) which can be inserted in the recesses.

2. The slip-proof clamping system according to claim 1, **characterized in that** the indentations are semi-circular in shape.

3. The slip-proof clamping system according to claim 1, **characterized in that** the lobes of the wrench are provided with enlargements (16) which are arranged at a distance from the head and fit into the indentations of the recesses.

4. The slip-free clamping system according to claim 1, **characterized in that** the wrench head is provided with lobes (28, 32) in the form of truncated cones pointing radially inwards.

5. The slip-free clamping system according to one of the preceding claims, **characterized in that** the greatest tangential width of the lobes is less than the smallest tangential width of the recesses.

## Revendications

1. Système de serrage anti-glissement constitué d'une clé et d'un élément d'assemblage à vis avec des cavités pour l'engagement de la clé pourvue de cames s'adaptant dans les cavités pour serrer et desserrer l'élément d'assemblage à vis, dans lequel l'élément d'assemblage à vis est un écrou d'accouplement avec une surface enveloppe cylindrique et une surface frontale annulaire et les cavités sont agencées dans la surface enveloppe, **caractérisé en ce que** les cavités (6, 22) s'étendent de la surface frontale parallèlement à l'axe sur une partie de la surface enveloppe (5, 23), possèdent une profondeur dans la direction radiale d'à peu près la moitié de l'épaisseur de paroi de l'écrou (1, 21) et, dans une zone externe se raccordant à la surface frontale sur à peu près la moitié de l'extension axiale de la cavité, une largeur constante avec des parois latérales égales et, dans une zone interne se raccordant axialement, un élargissement formé par des courbures des parois latérales en regard l'une de l'autre, et la clé (11, 25, 30) possède une tête (12, 26, 31) qui est pourvue de cames (14, 28, 32) insérables dans la direction axiale dans les cavités.

2. Système de serrage anti-glissement selon la revendication 1, **caractérisé en ce que** les courbures sont de forme semi-circulaire.

3. Système de serrage anti-glissement selon la revendication 1, **caractérisé en ce que** les cames de la clé sont pourvues d'élargissements (16) agencés à distance de la tête et s'adaptant dans les courbures des cavités.

4. Système de serrage anti-glissement selon la revendication 1, **caractérisé en ce que** la tête de la clé est pourvue de cames tronconiques (28, 32) dirigées radialement vers l'intérieur.

5. Système de serrage anti-glissement selon l'une quelconque des revendications précédentes, **caractérisé en ce que** la plus grande largeur tangentielle des cames est plus petite que la plus petite largeur tangentielle des cavités.
